# EUROPÄISCHE PATENTSCHRIFT

(11) **EP 1 173 689 B1**
(45) Veröffentlichungstag und Bekanntmachung des Hinweises auf die Patenterteilung: **16.07.2003**
(21) Anmeldenummer: 01917013.3
(22) Anmeldetag: 21.02.2001
(51) Int. Cl.: F16D 69/02, B23K 26/34

(54) **OBERFLÄCHENLEGIERTES ZYLINDRISCHES, TEILZYLINDRISCHES ODER HOHLZYLINDRISCHES BAUTEIL**
SURFACE-ALLOYED CYLINDRICAL, PARTIALLY CYLINDRICAL OR HOLLOW CYLINDRICAL COMPONENT
COMPOSANT CYLINDRIQUE, PARTIELLEMENT CYLINDRIQUE OU EN CYLINDRE CREUX ALLIE EN SURFACE

(30) Priorität: 28.02.2000 DE 10009250
(43) Veröffentlichungstag der Anmeldung: 23.01.2002
(73) Patentinhaber: Hydro Aluminium Deutschland GmbH, 51449 Köln (DE)
(72) Erfinder: FEIKUS, Franz, Josef, 53123 Bonn (DE); FISCHER, Alexander, 53913 Swisttal (DE)
(74) Vertreter: Simons, Johannes, Dipl.-Ing.
(86) Internationale Anmeldenummer: EP0101936
(87) Internationale Veröffentlichungsnummer: WO01065135

(56) Entgegenhaltungen:
- EP-A- 0 987 464
- DE-A- 19 817 091
- US-A- 5 612 110

## Beschreibung

Die Erfindung betrifft ein oberflächenlegiertes zylindrisches, teilzylindrisches oder hohlzylindrisches Bauteil, bestehend aus einer Aluminiummatrixgußlegierung und einer bis an die Bauteiloberfläche reichenden Ausscheidungszone aus einer Aluminium-Basislegierung mit ausgeschiedenen Hartphasen.

Ein Verfahren zur Beschichtung von Innenlaufflächen von Zylinderwandungen ist aus der DE-OS 198 17 091 bekannt. Gemäß Patentanspruch 1 der Offenlegungsschrift werden verschleißbeständige Oberflächen auf den Innenkolbenlaufflächen von Leichtmetallmotorblöcken dadurch erzeugt, daß eine Sonde für die kontinuierliche Zuführung von Siliziumpulver verwendet wird, in der ein Energiestrahl mit einem spiralig über die Oberfläche wandernden Strahlfleck relativ zum ortsfest gehaltenen Leichtmetallmotorblock bewegt wird. Bei einer Laserlichtleistung von ca. 2 kW und einem Strahlfleck-Durchmesser von ca. 0,5 bis 2 mm wird ca. 10g Pulver pro Minute auf die Oberfläche gebracht und einlegiert.-Dadurch kann bei einer Eindringtiefe von ca. 1 mm ein Hartstoffanteil von 20 bis 50 % in die Oberfläche einlegiert werden.

Es wurden ferner Versuche zur Entwicklung eines Verfahrens zur Herstellung eines Leichtmetallzylinderblocks durchgeführt, bei denen ein Laserstrahl mit einer Streifenbreite quer zur Vorschubrichtung von mindestens 2 mm über die ortsfest gehaltene Leichtmetallmatrixoberfläche geführt wird. Das Pulver wird dabei erst im Auftreffpunkt des Laserstrahls auf die Leichtmetallmatrixoberfläche auf Schmelztemperatur aufgeheizt und dann eindiffundiert. In der Auflegierungszone wird Primärsilizium gebildet, wobei eine mittlere Schichtdicke von 150 bis 650 µm in der Matrixlegierung als bevorzugt angegeben ist. Die Laserlichtleistung beträgt vorzugsweise 3 bis 4 kW, wobei auch linienförmige Fokussiersysteme eingesetzt werden können.

Das mit dem obengenannten Verfahren erzielbare Gefüge besteht aus einer Leichtmetallmatrixlegierung mit einer feindispersen, Primärsiliziumausscheidungen enthaltene Oberflächenschicht, die rundlich geformte Körner mit einem mittleren Korndurchmesser zwischen 1 und 10 µm aufweist. Neben der reinen Aluminiumphase enthält die Oberflächenschicht noch 10 bis 14 % AlSi-Eutektikum und 5 bis 20 % Primärsilizium, wobei die Mindesthärte ca. 160 HV beträgt.

Für bestimmte Einsatzzwecke werden Thermoschock-unempfindliche Bauteile verlangt. Dies läßt sich mit bisher bekannten Herstellungsverfahren nur durch sehr aufwendige Behandlungsmaßnahmen erreichen. Kennzeichnend für derartige hochbelastbare Bauteile ist ein langsamer Härteanstieg aus der Matrix bis in die Oberflächenschicht, wobei der Gesamthärteanstieg über einen Bereich von 200 % bezogen auf die Ausgangshärte der Matrixlegierung reichen sollte.

Aufgabe der vorliegenden Erfindung ist die Entwicklung von tribiologisch optimierten, wärmebehandelbaren Zylinderrohling mit neuen Gefügeeigenschaften und oberflächennahen Werkstoffveränderungen. Die neuen Gefügeeigenschaften und oberflächennahen Werkstoffveränderungen sollen insbesondere eine Anwendung des Gußrohlinges im Bereich von schwingungsbelasteten Bauteilen, wie z.B. Laufflächen von Lagerschalen von Kolbenmaschinen, Verschleißflächen von Bremsteilen, Gleit- und Reibflächen aller Art, ermöglichen.

Diese Aufgabe wird erfindungsgemäß durch die in den Patentansprüchen angegebenen Merkmale gelöst. Mit dem erfindungsgemäßen Aufbau aus Matrix, Ausscheidungszone und einer durch primäre Hartphasen übersättigte, eutektische Übergangszone können verschiedene Bauteile mit Verschleißflächen wie z. B. Gleitflächen (Kurbelwellenlager), Reibflächen (Bremsscheiben) sowie Motorblöcke und Zylinderköpfe einschließlich der darin angeordneten Ventilsitzringen mit besonders günstigen Eigenschaften hergestellt werden. Die Eigenschaften zeichnen sich durch einen langsamen Härteanstieg aus der Matrix bis in die Oberflächenschicht aus. Diese Eigenschaften prädestinieren die damit ausgerüsteten Bauteile für solche Anwendungsfälle, in denen thermoschock unempfindliche Bauteile erforderlich sind.

Es können verschiedene Legierungstypen in einer Auftragsbeschichtung verwendet werden. Das Pulver kann einstufig (ein Pulverstrahl) oder mehrstufig (mehrere Pulverstrahle) über entsprechend geformte Pulverschlitzdüsen auf die Werkstückoberfläche aufgebracht werden. Die Linienfokus-Breite beträgt mindestens 4 mm, vorzugsweise 5 bis 15 mm.

Für eine einstufige Pulverzugabe eignen sich als Werkstück die Legierungen AlSi und AlSiCu sowie AlSiCuNi und Mg-haltige Al-Legierungen, wobei im Pulverstrahl Silizium zugegeben wird. Für eine zweistufige Pulverzuführung könnte neben Silizium auch Blei als Pulvermaterial auf einen Gußrohling aus Aluminium-Silizium aufgebracht werden.

Im folgenden wird die Erfindung anhand von zwei Ausführungsbeispielen bei Verwendung von Silizium als Hartstoffpulver näher erläutert. Es zeigen:
- Fig. 1: Querschnitt durch ein erfindungsgemäß mit drei Zonen ausgebildetes oberflächenlegiertes Bauteil;
- Fig. 2: Härteverlauf entlang der Koordinate Y in Figur 1;

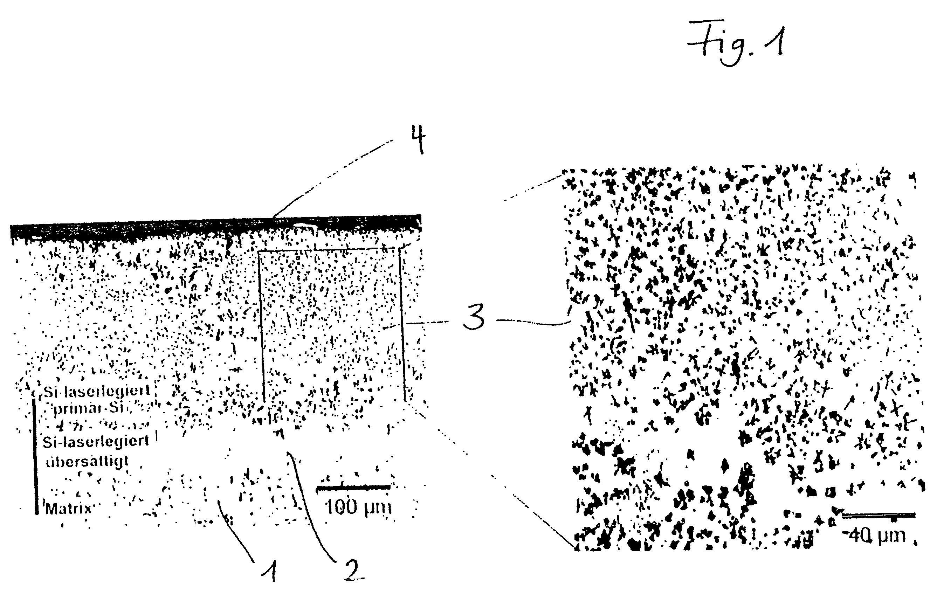

Figur 1 zeigt ausschnittsweise ein erfindungsgemäß hergestelltes Bauteil mit einer Aluminiummatrix 1, einer Übergangszone 2 und einer Ausscheidungszone 3. In der Ausscheidungszone 3 führen viele feine Hartstoffpartikel zu einer besonders harten Oberfläche mit HV > 250. Die Bauteiloberfläche 4 kann beispielsweise eine Lauffläche für Kolben, Wellen oder Lagerteile bilden und ist durch rein mechanische Bearbeitung in einem betriebsfertigen Zustand gebracht worden.

In der Übergangszone 2 liegt ein homogenes, übersättigtes Aluminium-Silizium-Gußgefüge vor, das eine einheitliche Graufärbung zeigt. Bis hierhin reicht der Wärmeeinfluß des auf die Oberfläche gerichteten Energiestrahls und bildet eine Aufschmelzfront.

Über die Matrix 1 wird die während der Oberflächenlegierung in das Bauteil eingebrachte Wärme abgeführt. Die Wärmebilanz kann durch Vorschubgeschwindigkeiten, durch Energiesteuerung und durch Kühlungsmaßnahmen beeinflußt werden.

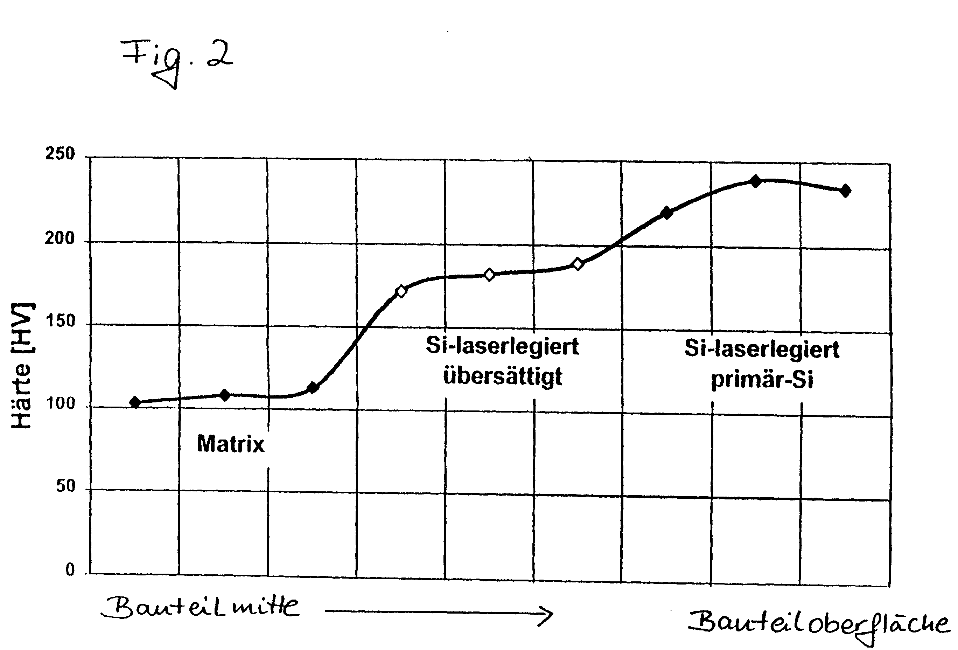

In Figur 2 ist der Härteverlauf eines erfindungsgemäß hergestellten Bauteiles im Bereich der Bauteiloberfläche dargestellt. Die Härte beginnt im vorliegenden Fall bei 100 HV in der Matrix und steigt stufenförmig auf den Maximalwert von 240 HV. Mit diesem Härteverlauf ist ein verbessertes Thermoschockverhalten verbunden.
Ein härterer Phasenbereich aus Si-legiertem Primärsilizium wird auf einer elastischeren, weicheren Matrixlegierung abgefedert.

Ein Verfahren zur Herstellung eines oberflächenlegierten, zylindrischen oder teilzylindrischen Bauteiles besteht darin, daß zunächst ein Energiestrahl mit einer linienförmigen Strahlfläche (auch Linienfokus genannt) auf eine Werkstückoberfläche gerichtet wird. Dabei wird die Werkstückoberfläche aufgeschmolzen und ein Hartstoff- oder ein Legierungspulver in die aufgeschmolzene Oberfläche zugeführt.

In der Auftreffzone des Energiestrahls bildet sich ein lokal begrenztes Schmelzbad mit einer Erwärmungs- und Aufschmelzfront, einer Lösungszone bzw. Umschmelzzone und eine Erstarrungsfront aus.

Das der Werkstückoberfläche zugeführte Pulver wird in der Erwärmungsfront aufgeschmolzen und in das Schmelzbad eingetaucht. Versuche haben ergeben, daß bei einer Wellenlänge von 780 bis 940 nm der Energiestrahl optimiert einkoppelt, so daß das Pulver schnell aufgeheizt und im Kontakt mit der verflüssigten Matrixlegierung in das Schmelzbad eindiffundiert wird.

Es tritt eine Konvektion in der Lösungszone auf, so daß der Homogenisierungsvorgang in der Schmelzzone beschleunigt wird. Dies wird ermöglicht durch den Energiestrahl mit einer spezifischen Leistung von mindestens 10⁵ w/cm². An Schliffbildern ist zu erkennen, daß das Hartstoff- oder Legierungspulver im Schmelzbad nur dann gleichmäßig verteilt ist, wenn der Linienfokus ausreichend lange auf die Lösungszone eingewirkt hat. Die genauen Werte lassen sich im Versuch ermitteln.

Das gleichmäßig verteilte Pulvermaterial wird dann in der Erstarrungszone einer gerichteten Erstarrung mit einer Abkühlungsgeschwindigkeit in der Erstarrungsfront von 200 bis 600 K/sec unterworfen, wobei die Vorschubgeschwindigkeit zwischen 500 und 5000 mm/min beträgt. In einer vorteilhaften Variante wird das Pulver im Gasstrom auf die Bauteiloberfläche befördert, so daß durch die kinetische Energie bereits eine bestimmte Pulvermenge in die Aufschmelzzone eindringen kann.

Weitere Versuche haben ergeben, daß der Energiestrahl in bevorzugter Weise vor der Auftreffzone geteilt wird, wobei ein erster Teilstrahl in der Erwärmungs- und Aufschmelzzone und ein zweiter Teilstrahl hinter die Erstarrungsfront zur thermischen Gefügebehandlung gelenkt wird. Mit diesem Verfahren läßt sich die Gefügeausbildung gezielt steuern.

Eine weitere Gefügesteuerung ist dadurch möglich, daß der Energiestrahl in der Erstarrungsfront mit einer spezifischen Leistung von < 1 KW/cm² intermittierend auf die Werkstückoberfläche gerichtet ist. Dabei hat sich herausgestellt, daß die Einwirkungszeit des Energiestrahls im Schmelzbad zur Lösung und homogenen Verteilung der Hartstoff- oder intermetallischen Phasen zwischen 0,02 und 1 Sekunde liegt.

Die genannten Anforderungen werden durch einen Diodenlaser von > 3 KW erfüllt, der eine einstellbare Linienfokus-Breite aufweist. Hiermit kann vor Beginn und am Ende einer Beschichtung der Energiestrahl in der Linienfokus-Breite quer zur Vorschubrichtung reduziert werden. In analoger Weise ist auch die Pulvermenge steuerbar, so daß bei einer flächigen Behandlung nur geringe Überschneidungen der zugeführten Pulvermenge bzw. der eingestrahlten Energie festgestellt wurden.

Sofern das Werkstück als Hohlzylinder ausgebildet ist, sollte es bevorzugt in Wannenlage um den Energiestrahl rotieren, so daß der Energiestrahl, der in bezug auf die Rotationsrichtung ortsfest gehalten wird, eine kontinuierliche Vorschubrichtung während der Rotation in Richtung der Rotationsachse zur Erzeugung einer flächigen Einlegierungszone vollzieht.

Mit der Erfindung sind oberflächenlegierte zylindrische, teilzylindrische oder hohlzylindrische Bauteile herstellbar. Sie bestehen aus einer Aluminiummatrixgußlegierung und einer bis an die Bauteiloberfläche reichenden Ausscheidungszone aus einer Aluminium-Basislegierung mit ausgeschiedenen Hartphasen. Zwischen Matrix und Ausscheidungszone liegt eine durch primäre Hartphasen übersättigte, eutektische Zone (Übersättigungszone) vor, wobei der Härteanstieg von der Matrix bis zur Bauteiloberfläche stufenweise erfolgt. Besonders günstige Verhältnisse lassen sich erreichen, wenn die Matrixlegierung vom Typ AlSiCu untereutektisch ist und in der übersättigten, eutektischen Übergangszone eine Legierung vom Typ AlSi mit fein ausgeschiedenen Primärsiliziumphasen kleiner 1 µ vorliegt, während in der Ausscheidungszone Primärsiliziumphasen von 2 bis 20 µ vorliegen. Dann lassen sich Härteanstiege bis zur Bauteiloberfläche von mindestens 200 % erreichen.

Das Schichtdickenverhältnis in einem erfindungsgemäßen Bauteil beträgt zwischen Ausscheidungszone und Übergangszone mehr als 2 : 1, gemessen von der Oberfläche des Bauteils in Richtung Aluminiummatrix. Es lassen sich dabei Härteanstiege zwischen der Matrix und der Bauteiloberfläche im Bereich von 1 : 1,5 : 2 bis 1 : 2 : 3 erreichen.

## Patentansprüche

1. Oberflächenlegiertes zylindrisches, teilzylindrisches oder hohlzylindrisches Bauteil, bestehend aus einer Aluminiummatrixgußlegierung und einer bis an die Bauteiloberfläche reichenden Ausscheidungszone aus einer Aluminium-Basislegierung mit ausgeschiedenen Hartphasen,
**dadurch gekennzeichnet,**
**daß** zwischen Matrix und Ausscheidungszone eine durch primäre Hartphasen übersättigte, eutektische Zone (im folgenden: Übergangszone) vorliegt und der Härteanstieg von der Matrix bis zur Bauteiloberfläche stufenweise erfolgt.

2. Bauteil nach Anspruch 1,
**dadurch gekennzeichnet,**
**daß** zur Herstellung eines Aluminiumzylinderblocks die Matrixlegierung vom Typ AlSiCu oder AlSiMg untereutektisch ist und in der übersättigten, eutektischen Übergangszone eine Legierung vom Typ AlSi mit fein ausgeschiedenen Primärsiliziumphasen < 1 µ vorliegt, während in der Ausscheidungszone Primärsiliziumphasen von 2 - 20 µ vorliegen, wobei der Härteanstieg bis zur Bauteiloberfläche mindestens 200 % beträgt.

3. Bauteil nach Anspruch 1,
**dadurch gekennzeichnet,**
**daß** zur Herstellung von Bremsteilen, die Gleit- und Reibflächen aufweisen, neben der reinen Aluminiumphase in der Oberflächenschicht noch 10 bis 14% AlSi Eutektikum bekommen und 5 bis 20 % Primärsilizium vorhanden sind.

4. Bauteil nach Anspruch 1,
**dadurch gekennzeichnet,**
**daß** zur Herstellung von schwingungsbelasteten Bauteilen Hartstoffe aus Primär-Silizium an der Oberfläche eingebettet sind, die eine Härte von 160 bis 240 HV aufweisen.

5. Bauteil nach einem der vorhergehenden Ansprüche,
**dadurch gekennzeichnet,**
**daß** das Schichtdickenverhältnis gemessen von der Oberfläche des Bauteils in Richtung Aluminiummatrix zwischen Ausscheidungszone und Übergangszone größer 2 : 1 ist.

6. Bauteil nach einem der vorhergehenden Ansprüche,
**dadurch gekennzeichnet,**
**daß** der Härteanstieg zwischen der Matrix und der Bauteiloberfläche stufenweise erfolgt, wobei der Härteanstieg in der Matrix, in der Übergangszone und im Ausscheidungsbereich sich verhält wie 1 : 1,5 : 2 bis 1 : 2 : 3 und die Endhärte auf der Bauteiloberfläche bei über 200 HV liegt.

## Claims

1. Surface-alloyed cylindrical, partly cylindrical or hollow cylindrical structural member, consisting of an aluminium matrix casting alloy and a precipitation zone extending as far as the upper surface of the structural member, comprising an aluminium based alloy with precipitated hard phases,
**characterised in that**,
between the matrix and the precipitation zone there is a eutectic zone supersaturated by primary hard phases (hereinafter called the transition zone) and the increase in hardness from the matrix to the surface of the structural member takes place stepwise.

2. Structural member according to Claim 1,
**characterised in that**,
for the manufacture of an aluminium cylinder block the matrix alloy is hypoeutectic of the type AlSiCu or AlSiMg and in the supersaturated eutectic transition zone there is an alloy of the type AlSi with finely precipitated primary silicon phases < 1 µ whereas in the precipitation zone there are primary silicon phases of 2 - 20 µ, where the increase in hardness as far as the surface of the structural member is at least 200 %.

3. Structural member according to Claim 1,
**characterised in that**,
for the manufacture of brake parts having sliding and friction surfaces, in addition to the pure aluminium phase, in the surface layer there is 10 to 14 % AlSi eutectic and 5 to 20 % primary silicon.

4. Structural member according to Claim 1,
**characterised in that**,
for the manufacture of structural members exposed to vibrations there are embedded on the surface hard materials comprising primary silicon which have a hardness of 160 to 240 HV.

5. Structural member according to one of the preceding Claims,
**characterised in that**,
the layer thickness ratio measured from the surface of the structural member in the direction of the aluminium matrix between the precipitation zone and the transition zone is greater than 2 : 1.

6. Structural member according to one of the preceding Claims,
**characterised in that**,
the increase in hardness between the matrix and the surface of the structural member takes place stepwise, where the increase in hardness in the matrix, in the transition zone and in the precipitation zone is in the ratio 1 : 1.5 : 2 to 1 : 2 : 3 and the final hardness at the surface of the structural member lies above 200 HV.

## Revendications

1. Composant cylindrique, en partie cylindrique ou en forme de cylindre creux allié en surface, constitué d'un alliage pour coulée à matrice d'aluminium et d'une zone de précipitation s'étendant jusqu'à la surface du composant, constituée d'un alliage à base d'aluminium présentant des phases dures précipitées,
**caractérisé en ce que**, entre la matrice et la zone de précipitation, il apparaît une zone eutectique, sursaturée par des phases dures primaires (appelée par la suite zone de transition) et **en ce que** l'augmentation de la dureté se produit progressivement de la matrice jusqu'à la surface du composant.

2. Composant selon la revendication 1, **caractérisé en ce que**, pour fabriquer un bloc-cylindres en aluminium, l'alliage de la matrice du type AlSiCu ou AlSiMg est inférieur au point eutectique et **en ce que** dans la zone de transition eutectique sursaturée se trouve un alliage du type AlSi avec des phases de silicium primaire finement divisées < 1 µ, pendant que, dans la zone de précipitation, les phases de silicium primaire sont comprises entre 2 et 20 µ, moyennant quoi l'augmentation de la dureté jusqu'à la surface du composant s'élève au moins à 200 %.

3. Composant selon la revendication 1, **caractérisé en ce que**, pour fabriquer des éléments de freinage qui présentent des surfaces glissantes et à frottement, outre la phase d'aluminium pure dans la couche superficielle, encore 10 à 14% d'eutectique d'AlSi sont reçus et 5 à 20% de silicium primaire sont présents.

4. Composant selon la revendication 1, **caractérisé en ce que**, pour produire des composants soumis à des oscillations, on les enrobe de substances dures constituées de silicium primaire au niveau de la surface, qui présentent une dureté comprise entre 160 et 240 HV.

5. Composant selon l'une quelconque des revendications précédentes, **caractérisé en ce que** le rapport d'épaisseur des couches mesuré depuis la surface du composant dans la direction de la matrice d'aluminium entre la zone de précipitation et la zone de transition est supérieur à 2/1.

6. Composant selon l'une quelconque des revendications précédentes, **caractérisé en ce que** l'augmentation de la dureté entre la matrice et la surface du composant augmente par paliers, moyennant quoi l'augmentation de la dureté dans la matrice, dans la zone de transition et dans la zone de précipitation est de 1/1, 5/2 à 1/2/3 et la dureté finale sur la surface du composant est supérieure à 200 HV.
